Europäisches Patentamt

European Patent Office

Office européen des brevets

(19)

(11) **EP 1 571 187 A1**

(12) **EUROPEAN PATENT APPLICATION**

(43) Date of publication:
**07.09.2005 Bulletin 2005/36**

(51) Int Cl.[7]: **C09D 11/10**, C09D 11/00

(21) Application number: **05250953.6**

(22) Date of filing: **19.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **03.03.2004 US 549863 P**

(71) Applicant: **ROHM AND HAAS COMPANY Pennsylvania 19106-2399 (US)**

(72) Inventors:
• **Graziano, Louis Christopher Doylestown, Pennsylvania 18901 (US)**
• **Wu, Richard Shu-Hua Fort Washington, Pennsylvania 19034 (US)**

(74) Representative: **Buckley, Guy Julian ROHM AND HAAS (UK) LTD. European Patent Department 28th Floor, City Point One Ropemaker Street London EC2Y 9HS (GB)**

(54) **Insoluble polymer compositions suitable for ink jet ink formulations**

(57)    A polymer composition which is crosslinked and insoluble in radiation curable monomers, prepolymers, oligomers, and mixtures thereof, is suitable for formulation into radiation curable compositions, for example, as binders for formulation in radiation curable ink jet ink compositions. Such crosslinked, insoluble polymer compositions impart improved application and curing characteristics to ink jet ink compositions without loss of acceptable jettability characteristics. The polymer composition may be blended with radiation curable monomers, prepolymers, oligomers, or mixtures thereof, to form a radiation curable binder blend for formulation into a radiation curable ink jet ink composition. A radiation curable ink jet ink composition including at least one crosslinked, insoluble polymer binder composition, a liquid medium and a colorant is also provided.

**EP 1 571 187 A1**

**Description**

The present invention relates to crosslinked, insoluble polymer compositions for use in radiation curable compositions. In particular, the present invention relates to crosslinked, insoluble polymer binder compositions for use in radiation curable ink jet ink compositions. The present invention also relates to reactive, crosslinked, insoluble polymer binder compositions useful as components of ink jet ink compositions. The present invention also relates to radiation curable ink jet ink compositions comprising a liquid medium, a colorant and the crosslinked, insoluble polymer binder composition and the images formed therefrom.

Background of the Invention

Ink jet printing is a well established technique for applying an ink jet ink composition to a substrate, such as paper, fabric, vinyl, leather, ceramics, polyester, or plastic, to form an image on the substrate. Ink jet printing involves no physical contact between the functional part of the ink jet printer from which the ink jet ink composition is projected, or "jetted", and the substrate onto which the ink jet ink composition is deposited.

Generally, ink jet ink compositions are mixtures, dispersions, solutions or suspensions, that include at least one liquid component and at least one colorant which may be soluble (dyes) or insoluble (pigments or dyes) in the liquid component or components. In practice, micro-droplets of the ink jet ink composition are projected, by well known means, through small nozzles in the print head of the ink jet printer and onto the substrate. After such application, the ink jet ink composition is dried or cured, depending on the type of liquid component or components used, to solid form on the substrate such that the colorant, or colorants, become fixed on the substrate to form the desired image. As discussed in further detail below, in order to maintain the required degree of projectability, or "jettability" as it is referred to in the art, of the ink jet ink composition, they have heretofore been formulated to have relatively low viscosities and include substances having relatively small particle sizes.

Ink jet ink compositions may be water-based (i.e., aqueous), solvent-based, oil-based, or 100% solids. This nomenclature differentiates the ink jet ink compositions in terms of how much of the ink jet ink composition is left behind on the substrate after drying or curing. Water-based, solvent-based, and oil-based ink jet ink compositions will lose at least a portion of the liquid component to evaporation during the post-application drying or curing step, such that only a portion of the mass of the ink jet ink composition remains on the substrate to form the desired image. On the other hand, the drying or curing step will convert substantially all of the liquid component or components of 100% solids ink jet ink compositions to solid form such that substantially all of the mass of a 100% solids ink jet ink composition remains on the substrate to form the desired image.

Any of the foregoing four types of ink jet ink compositions (i.e., aqueous, solvent-based, oil-based and 100% solids) may be radiation curable, which means that they can be cured by exposure to actinic radiation. Typically, radiation curable ink jet ink compositions require the inclusion of mixtures of radiation curable monomers, or such monomers mixed with low molecular weight radiation curable oligomers. Such monomers and oligomers are typically in liquid form and are unreactive at ambient conditions, but are capable of being initiated to react and crosslink with themselves and/or each other by exposure to actinic radiation, such as ultraviolet (UV) radiation or electronic beam (E-beam) radiation. It is known that where UV radiation is to be used to initiate such monomers and/or oligomers, it is often necessary to also include photoinitiators in the mixture of radiation curable monomers and/or oligomers. The reacting and crosslinking of the radiation curable monomers and/or oligomers converts them to solid form and binds the colorant or colorants of the ink jet ink composition onto the substrate.

Radiation curable monomers and/or oligomers, as well as certain polymer compositions, may act as "binders" when included in ink jet ink compositions. The use of such polymer binders is known to improve various properties of the ink compositions, as well as the images created therefrom. Such improved properties include, but are not limited to, abrasion resistance, wash resistance, smear resistance, permanence, gloss, adhesion and optical properties. It is also known that as the molecular weight of the polymer binder constituents increases, some or all of the aforesaid properties of the ink compositions and images formed therefrom can be further improved.

Thus, on the one hand, it would be advantageous to use polymer binders having relatively high molecular weights in ink jet ink compositions. However, it is also known that, as mentioned in European Patent Publication Nos. EP 0187045 and EP 0997508, it is important to control the viscosity of ink jet ink compositions, in part, to maintain the desired jettability of the ink compositions (i.e., to ensure that the ink jet ink compositions can be effectively projected from the small nozzles of the ink jet printer). In practice this means that it is often important to keep the viscosities of ink jet ink compositions relatively low.

Unfortunately, as the molecular weight of the polymer binder compositions used in radiation curable ink jet ink compositions increases, the viscosity of the ink jet ink compositions also typically increases, sometimes to the point of interfering with jettability of the ink composition. Thus, to ensure jettability of radiation curable ink jet ink compositions, the molecular weight of the polymer binders must also be low enough to form an ink composition having sufficiently low viscosity, typically less than about 100 cps, so that the ink composition can be jetted, without clogging or blockage, from the nozzles of the printhead of the ink jet printer. As a result, the use of polymer binders for radiation curable ink jet ink compositions is often limited to the inclusion of monomeric, macromonomeric and oligomeric binder constituents having a number average molecular weight, $M_n$, of not more than about 50,000 in order to keep ink viscosity low enough to effectively jet the ink from the nozzles of the printhead.

For example, EP 0187045 B1 discloses the use of ethylenically unsaturated thermoplastic macromonomer blends that are soluble in reactive diluents for use in non-aqueous (100% solids) ink jet ink compositions. However, the number average molecular weight ($M_n$) of the macromonomers is restricted to less than about 50,000 for the purpose of ensuring sufficient solubility of the macromonomer in the reactive diluents and acceptable viscosity of the ink formed therefrom. Thus, the macromonomers of EP 0187045 B1 were chosen for their solubility and their ability to provide functionalities which enable crosslinking and copolymerization with other, lower molecular weight monomers to form thermoplastic or thermoset products.

In addition, Tanabe US 6,433,038 B1 discloses a 100% solids photocurable ink composition based on a mixture, having a binder comprising a urethane oligomer that is soluble in multifunctional acrylate monomers, which can be photocured after application to a substrate. The technology disclosed by Tanabe also requires the use of binders that are soluble in their monomer carrier and which have relatively low molecular weights, $M_n$, of not more than about 20,000 to avoid high viscosities that would interfere with jettability of the ink.

EP 0997508 discloses 100% solids radiation curable ink jet ink compositions that include curable binder compositions which are mixtures of soluble photocurable monomers, or such monomers mixed with low molecular weight oligomers that are also soluble in the monomers, and photoinitiators. Based upon the formulas disclosed in EP 0997508, the molecular weights of the monomer and oligomer constituents of these binder compositions are no more than about 10,000.

Ink jet ink compositions containing soluble, low molecular weight ($M_n$) radiation curable polymers, such as those described in the above references, are typically limited in the amount of the polymer binder that can be included in ink jet ink compositions due to the viscosity contributions of the polymer.

There is a need for polymer binder compositions having a high molecular weight which can be used in radiation curable ink jet ink compositions and which would achieve further improvements to the properties of the ink and the images formed therefrom. Without intending to be limited by theory, such ink jet ink compositions can exhibit improved durability, such as wash-fastness or smear resistance, due, it is believed, to increased adhesion and flexibility that can be imparted to the ink jet ink composition by the high molecular weight polymer binder, when the ink composition is applied to a substrate and cured to form an image thereon.

In addition, there is a need to minimize the increase in viscosity of a curable ink composition that includes such higher molecular weight polymer binders when reactive monomers, prepolymers, and/or oligomers are added, so that the ink jet ink compositions can be formulated with a higher resin content. The ability to formulate ink jet ink compositions with high resin content can result in improved application properties of the ink compositions, such as improved early set resulting in better image quality, as compared to traditional radiation cured inks, and improved holdout on porous media such as paper and textiles. Benefits in flexibility of such ink compositions can also be realized due to the ability to design resin softness into such ink compositions.

The problem addressed by the present invention is to provide a crosslinked, insoluble polymer binder having a high molecular weight to impart further improvements to the aforementioned characteristics of the ink composition of which it is a component, while avoiding unacceptable increases in viscosity of the ink composition which otherwise can result in poor jettability, or even total failure to jet, of the ink composition.

Summary of the Invention

The present invention provides a polymer composition for formulation into a radiation curable composition, wherein the polymer composition is crosslinked and insoluble in radiation curable monomers, radiation curable prepolymers, radiation curable oligomers, and mixtures thereof, and the polymer composition is suitable for formulation with at least one radiation curable monomer, prepolymer, and/or oligomer into a radiation curable composition. The polymer composition of the present invention may be reactive, has a particle size of from 1 to 1,000 nanometers and a number average molecular weight of up to 3,000,000. The polymer composition of the present invention comprises units derived from mono-ethylenically unsaturated (meth)acrylates, multi-ethylenically unsaturated (meth)acrylates, and mixtures thereof.

The present invention also provides a radiation curable binder blend comprising a liquid medium and a polymer binder composition which comprises at least one polymer composition which is crosslinked and insoluble in radiation curable monomers, radiation curable prepolymers, radiation curable oligomers, and mixtures thereof, wherein, when said radiation curable binder blend is formulated into an ink jet ink composition, said ink jet ink composition is jettable.

The present invention also provides a radiation curable ink jet ink composition comprising: a colorant; a liquid medium; and a polymer binder composition which comprises at least one polymer composition which is crosslinked and insoluble in radiation curable monomers, radiation curable prepolymers, radiation curable oligomers, and mixtures thereof, wherein, when the radiation curable binder blend is formulated with at least one radiation curable monomer, prepolymer, and/or oligomer into an ink jet ink composition, the ink jet ink composition is jettable. The ink jet ink composition has a viscosity of no more than 0.15 Pa-s at ambient temperature.

The present invention also provides a method for improving the characteristics of a radiation curable ink jet ink composition applied to a substrate comprising the steps of (a) providing a radiation curable ink jet ink composition comprising a liquid medium, a colorant and a polymer binder composition comprising at least one polymer composition which is crosslinked and insolouble in radiation curable monomers, radiation curable prepolymers, radiation curable oligomers, and mixtures thereof; (b) applying the ink jet ink composition to a substrate; and (c) curing the ink jet ink composition by applying actinic radiation thereby forming an image on said substrate. The image thus formed is also within the scope of the present invention.

Detailed Description of the Invention

The present invention relates to polymer compositions which are crosslinked and insoluble and which are suitable for use in radiation curable compositions. Such radiation curable compositions find application in various fields, including, but not limited to, coatings such as paints and inks, and adhesives.

For example, one embodiment of the present invention relates to crosslinked, insoluble polymer binder compositions for use as components of radiation curable ink jet ink compositions. Such crosslinked, insoluble polymer binder compositions may be non-reactive or reactive, in accordance with the present invention. Radiation curable ink jet ink compositions that are formulated with the crosslinked, insoluble polymer binder compositions of the present invention typically comprise a liquid medium, a colorant and at least one crosslinked, insoluble polymer binder composition.

Definitions and conventions relating to certain terminology and measurements that are used throughout the following discussion are as follows.

As used herein, the term "molecular weight" refers to the number average molecular weight of polymer molecules as determined by gel permeation chromatography using polystyrene as a standard and tetrahydrofuran as the mobile phase.

The term "units derived from" used herein refers to polymer molecules that are synthesized according to known polymerization techniques wherein a polymer contains "units derived from" its constituent monomers, prepolymers and/or oligomers.

The term "crosslinked", as used herein, describes a polymer material that comprises units derived from components whereby at least some of said components were multifunctional (i.e., they have more than one reactable functionality) prior to polymerization. Such crosslinked polymer material may be non-reactive or reactive, depending upon the degree to which the reactable functionalities of the constituent monomer components were reacted with one another during (or after) polymerization. The crosslinked polymer can be formed either during the polymerization of the initial polymer, such as for example by using multifunctional starting materials during the polymerization process, or after the polymer is formed, such as for example by reacting the polymer with multifunctional materials.

The term "partially reacted", as used herein, describes a crosslinked polymer material wherein at least a portion of the pre-polymerization reactable functionalities of the constituent starting components remains available in the polymer material for further reaction, such as for example, during curing. In other words, only a portion of the reactable functionalities of the constituent starting components that existed prior to polymerization were reacted with one another.

Similarly, the term "entirely reacted", as used herein, is meant to describe a crosslinked polymer material in which none of the pre-polymerization reactable functionalities of the constituent starting components remains available in the polymer material for further reaction. In other words, all of the initially existing reactable functionalities of the constituent starting components have been reacted with one another. An entirely reacted crosslinked polymer material is not capable of further curing and crosslinking with itself or other curable materials unless the polymer is further functionalized. Such entirely reacted, crosslinked polymer materials may, nonetheless, be blended with one or more curable materials (e.g., monomers, prepolymers, oligomers, and mixtures thereof).

The term "at least partially reacted" is used herein to include partially reacted, as well as entirely reacted, polymer materials.

The term "insoluble" is used herein to describe polymer materials which comprise polymer particles and means that, when the polymer material is mixed, blended, or otherwise combined, with radiation curable monomers, prepolymers, and/or oligomers, the polymer particles maintain their identities as particles and the individual polymer chains (i.e., polymer molecules) which comprise the particles) do not separate appreciably from one another. Moreover, "insoluble" materials, when formulated into an ink jet ink do not appreciably increase in viscosity beyond where the viscosity of the ink jet ink formulation remains no greater than 0.15 Pascal-seconds ("Pa-s") (equivalent to about 100 centipoise) at ambient temperature, as measured using a Brookfield Viscometer Model DV-II with a Brookfield UL Adapter and recorded at a spindle speed of 20 rpm.

As is well known in the art, the glass transition temperature, Tg, of a polymer can be estimated using the Fox equation (Bulletin of the American Physical Society 1, 3, page 123 (1956)), which is as follows:

$$\frac{1}{T_g} = \frac{w_1}{T_{g(1)}} + \frac{w_2}{T_{g(2)}}$$

For a copolymer including monomers $M_1$ and $M_2$, $w_1$ and $w_2$ refer to the weight fraction of the two monomers, respectively, and $T_{g(1)}$ and $T_{g(2)}$ refer to the glass transition temperatures, in degrees Kelvin, of the two corresponding homopolymers derived from monomers $M_1$ and $M_2$. The glass transition temperatures of various homopolymers can be found, for example, in "Polymer Handbook", edited by J. Brandrup and E.H. Immergut, Interscience Publishers. For polymers containing three or more monomers, additional terms are added (i.e., $1/T_g = \Sigma(w_n/T_{g(n)})$). Although the $T_g$ of a polymer can also be measured by various other techniques, the particular values of $T_g$ reported hereinafter are calculated based on the Fox equation provided above.

As used herein, the term "(meth)acrylates" is intended to include both acrylate and methacrylate types of monomers.

As used herein, the term "radiation curable" means that the particular compositions being discussed are unreactive at ambient conditions, but capable of being initiated to react and crosslink with themselves and/or other radiation curable compounds (i.e., "cured"), by exposure to actinic radiation, such as ultraviolet (UV) radiation or electronic beam (E-beam) radiation.

The term "ambient conditions" as used herein in connection with radiation curable compounds refers to ambient temperatures of from about 15 °C to 40 °C and ambient pressure of about 1 atmosphere.

All percentages used herein to describe the compositional constituents of the various embodiments of the present invention, unless otherwise specified, are weight percents based upon the total weight of the particular composition, latex, mixture, etc. being discussed.

All ranges defined herein are inclusive and combinable.

Although the crosslinked, insoluble polymer composition of the present invention may be applicable to other types of radiation curable compositions, including various types of ink compositions or coatings, as would be understood by persons of ordinary skill in the relevant art, the discussion and description which follow focus on application of the present invention as binders for formulation into radiation curable ink jet ink compositions. Furthermore, while the polymer binder compositions of the present invention will be described hereinafter in particular in connection 100% solids radiation curable ink jet ink compositions, it is understood that they may also be useful for other types of ink jet ink compositions.

A first embodiment of the present invention includes polymer binder compositions which are crosslinked and insoluble in radiation curable materials, and suitable for formulating into radiation curable ink jet ink compositions. Such polymer binder compositions are capable of being formulated into a radiation curable ink jet ink composition, along with radiation curable monomers, radiation curable prepolymers, radiation curable oligomers, or mixtures thereof, for curing and further crosslinking. More particularly, the polymer binder compositions in accordance with the present invention are insoluble in the radiation curable monomers, prepolymers, and/or oligomers. This insolubility is believed to reduce viscosity increases when the polymer binder compositions are formulated into a radiation curable ink jet ink composition, with the curable monomers and/or oligomers and colorants, such that the ink composition remains jettable.

The crosslinked, insoluble polymer binder compositions of the present invention comprise at least one polymer composition which is insoluble in radiation curable monomers, radiation curable prepolymers, radiation curable oligomers, and mixtures thereof. Each of the at least one polymer compositions may be at least partially reacted, prior to curing, such that after blending with radiation curable monomers, prepolymers, and/or oligomers and included in an ink jet ink composition, the increase in viscosity of the ink composition remains low enough so that the ink jet ink composition is jettable through an ink jet printhead. The ink jet ink composition into which the polymer binder compositions of the present invention are formulated is unreactive at ambient conditions and capable of being initiated (cured) via actinic radiation. The use of the polymer binder compositions in accordance with the present invention in radiation curable ink jet ink compositions may result in improvements to one or more of the following characteristics of the ink composition: jettability, substrate holdout, adhesion, abrasion resistance, wash resistance, smear resistance, flexibility or optical properties.

At least one of the one or more polymer compositions of the polymer binder compositions of the present invention may contain units derived from either or both mono- and multi- ethylenically unsaturated (meth)acrylates. Examples of such monomers include but are not limited to those described in EP1245644A2 and include, for example, (meth)acrylate monomers, (meth)acrylic acid, $C_1$-$C_{12}$ (meth)acrylates, (meth)acrylamides, methylolacrylamides, $C_8$-$C_{22}$ alkenyl (meth)acrylates, aromatic (meth)acrylates, phosphorus-containing compounds such as phosphoethyl (meth)acrylate, and hydroxy alkyl (meth)acrylates. Examples of suitable multi-ethylenically-unsaturated monomers useful in the present invention are also described in EP1245644A2 and include, but are not limited to di-, tri-, tetra-, or higher multi-functional ethylenically unsaturated monomers, including but not limited to, (meth)acrylate types of monomers.

Alternatively at least one of the one or more insoluble polymer compositions of the present invention may be condensation products. Some examples of condensation products that can be used to make the insoluble polymer compositions include the reaction products of multi-functional hydroxy functional compounds, and/or multi-functional amine functional compounds, and multi-functional isocyanate compounds. Examples of such hydroxy functional compounds include but are not limited to trimethylolpropane, hexanediol, and polymers or oligomers derived from hydroxy functional monomers such as for example phenoxy ethyl (meth)acrylate, cyclictrimethylolpropane formal mono(meth) acrylate, 1,6-hexanediol diacrylate, alkoxylated pentaerythritol tetraacrylate, polycaprolactone polyol, and polypropylene glycol. Examples of such multifunctional isocyanate compounds include but are not limited to toluene diisocyanate, methylenediisocyanate, isophorone diisocyanate, trimethylhexamethylene diisocyanate, and xylylene diisocyanate.

In addition, at least one of the one or more polymer compositions of the polymer binder composition of the present invention typically have a number average molecular weight ($M_n$) of up to 3,000,000, such as in the range of 10,000 to 3,000,000, or in the range of 10,000 to 2,000,000, or even in the range of 25,000 to 3,000,000.

The polymer compositions of the polymer binder compositions of the present invention are typically prepared using emulsion addition polymerization, but can also be prepared using other polymerization methods such as dipersion, solution, suspension or condensation polymerization. Furthermore, the polymer binder compositions of the present invention can be combined with reactive or non-reactive binders which have molecular weights ($M_n$) less than 10,000.

The glass transition temperature ("Tg") of the polymer binder compositions of the present invention is typically from about -50°C to 150°C, such as in the range of -25°C to 120°C, or even in the range of -10°C to 100°C, the types of monomers and the amounts of the monomers being selected, as is well known to persons of ordinary skill in the art, to achieve the desired polymer Tg range.

In addition, at least one of the one or more polymer compositions of the polymer binder compositions of the present invention have an average particle diameter from 1 to 1000 nanometers, such as from 1 to 500 nanometers, or from 1-50 nanometers, or even from 1 to 20 nanometers, as determined using a Brookhaven Model BI-90 particle sizer manufactured by Brookhaven Instruments Corporation, Holtsville NY, reported as "effective diameter". It is also contemplated that the polymer binder compositions of the present invention may include multimodal particle size polymers, wherein two or more distinct particle sizes, or very broad distributions, are provided, as is taught in US Patent Nos. 5,340,858; 5,350,787; 5,352,720; 4,539,361; and 4,456,726, each of which are hereby incorporated herein in their entireties.

One or more of the polymer compositions of the polymer binder compositions of the present invention may be entirely reacted, since they are intended to be blended with radiation curable monomers and/or oligomers into a radiation curable binder blend, which is then formulated into radiation curable ink jet ink compositions. It is possible that at least one of the one or more polymer compositions of the polymer binder compositions are only partially reacted such that, at the time they are formulated into a curable solids ink composition, they have reactable functionalities and are, therefore, also curable (i.e., reactive) with themselves, as well as with the curable monomers, prepolymers, and/ or oligomers, upon exposure to actinic radiation.

For example, without limitation, where it is desired to produce a polymer composition having curable reactable functionalities and suitable for use in the polymer binder compositions of the present invention, the polymer composition may be prepared including, as polymerized units, either or both of the following types of monomeric compounds:

a. at least one multiethylenically unsaturated monomer, and
b. at least one monoethylenically unsaturated monomer which has a reactable functionality that can be reacted with a modifying compound which, in turn, contains a complementary reactable group, reactable by either ionic or covalent bonding, as well as a radiation curable functional group that can be reacted through exposure to actinic radiation. Whether the reaction between the reactable functionality and the complemetary functional group (the complementary bonding pair) is ionic or covalent, the first or second member of each complementary bonding pair may be present either in the polymer binder or, alternatively, in the modifying compound.

Inclusion of polymer compositions having multiethylenically unsaturated monomers, as polymerized units, in the insoluble polymer binders provides radiation curable functionality to the polymer binders. More particularly, suitable multiethylenically unsaturated monomers useful in the present invention include di-, tri-, tetra-, or higher multifunctional ethylenically unsaturated monomers, such as, for example, trivinylbenzene, divinyltoluene, divinylpyridine, divinylnaphthalene and divinylxylene; and such as ethyleneglycol diacrylate, trimethylolpropane triacrylate, diethyleneglycol divinyl ether, trivinylcyclohexane, allyl methacrylate ("ALMA"), ethyleneglycol dimethacrylate ("EGDMA"), diethyleneglycol dimethacrylate ("DEGDMA"), propyleneglycol dimethacrylate, propyleneglycol diacrylate, trimethylolpropane trimethacrylate ("TMPTMA"), divinyl benzene ("DVB"), 2,2-dimethylpropane-1,3-diacrylate, 1,3-butylene glycol diacrylate, 1,3-butylene glycol dimethacrylate, 1,4-butanediol diacrylate, diethylene glycol diacrylate, diethylene glycol dimethacrylate, 1,6-hexanediol diacrylate, 1,6-hexanediol dimethacrylate, tripropylene glycol diacrylate, triethylene glycol dimethacrylate, tetraethylene glycol diacrylate, polyethylene glycol 200 diacrylate, tetraethylene glycol dimethacrylate, polyethylene glycol dimethacrylate, ethoxylated bisphenol A diacrylate, ethoxylated bisphenol A dimethacrylate, polyethylene glycol 600 dimethacrylate, poly(butanediol) diacrylate, pentaerythritol triacrylate, trimethylolpropane triethoxy triacrylate, glyceryl propoxy triacrylate, pentaerythritol tetraacrylate, pentaerythritol tetramethacrylate, dipentaerythritol monohydroxypentaacrylate, divinyl silane, trivinyl silane, dimethyl divinyl silane, divinyl methyl silane, methyl trivinyl silane, diphenyl divinyl silane, divinyl phenyl silane, trivinyl phenyl silane, divinyl methyl phenyl silane, tetravinyl silane, dimethyl vinyl disiloxane, poly(methyl vinyl siloxane), poly(vinyl hydro siloxane), poly (phenyl vinyl siloxane) and mixtures thereof.

With reference to the above-described mono- or multi-ethylenically unsaturated monomers, it is noted that their inclusion, as polymerized units, in one or more of the polymer compositions of the polymer binder compositions, would not necessarily provide the polymer binder composition with radiation curable functionalities. However, when the mono- or multi-ethylenically unsaturated monmers contain secondary reactable functionality, the resultant polymer composition can be reacted with the complementary reactable group of a suitable modifying compound which also contains a radiation curable functional group. This results in the incorporation of a radiation curable functionality in the polymer binder composition.

In practice, after initial formation of the polymer composition by any of the conventional known polymerization techniques mentioned above, but prior to formulation of the polymer composition into a radiation curable ink composition, suitable modifying compounds are blended and reacted with the polymer composition such that the modifying compounds would be chemically combined with the polymer compositions and their radiation curable functionalities would still be available for reaction by exposure to actinic radiation. In the foregoing manner, raditaion curable functional groups are incorporated into the polymer binder composition.

Where the reactable functionality of the polymer composition and the complementary reactable group of the modifying compound are ionic complementary bonding pairs, their bonding may involve acid-base interaction and/or ion pair bonding of negatively and positively charged atoms. Where ionic complementary bonding pairs are to be used, suitable modifying compounds include, but are not limited to, (meth)acrylic acid, crotonic acid, dicarboxylic acid monomers such as itaconic acid, maleic acid, and fumaric acid, 2-acrylamido-2-methyl propane sulfonic acid, styrene sulfonic acid, vinyl sulfonic acid; and phosphorous acid monomers such as 2-phosphoethyle (meth)acrylate, vinyl phosphoric acid, vinyl phosphinic acid, N,N-dimethyl aminoethyl(meth)acrylate, and N-ethyldimethylallyl amine.

Covalent bonding, may be achieved with complementary reaction groups such as, for example: (a) acetoacetate-aldehyde; (b) acetoacetate-amine; c) amine-aldehyde; (d) hydroxyl-anhydride; (e) amine-isocyanate; (f) amine-epoxy; (g) aldehyde-hydrazide; (i) acid-epoxy; (j) acid-carbodiimide; (k) acid-chloro methyl ester; (j) acid-chloro methyl amine; (m) acid-anhydride; (n) acid-aziridine; (o) epoxy-mercaptan; (p) alcohol-epoxy; and (q) isocyanate-alcohol. Where complementary bonding pairs are to be used, either reacting functionality can reside in the polymer composition, or in the modifying compound. Where covalent complementary bonding pairs are to be used, suitable modifying compounds include, but are not limited to, unsaturated monoepoxides including glycidyl (meth)acrylate, allyl glycidyl ether, glycidyl cinnamates, glycidyl crotonares, glycidyl itaconates, glycidyl norbornenyl ester, glycidyl norbornenyl ether, N-t-butylaminoethyl (meth)acrylate, (meth)acrylic acid, dimethyl aminoethyl methacrylate and the like.

The polymer compositions suitable for use as the polymer binder compositions of the present invention may or may not be homogeneous in their compositiional distribution. For example, in a particular embodiment of the present invention, the polymer composition may be a multistage core/shell polymer whereby the the first stage contains units derived from monomers that give a soft, elastomeric composition, and later stages contain units derived from monomers that give a polymeric composition that is harder than the first stage, and is highly crosslinked to minimize increases in viscosity when blended with radiation curable monomers, prepolymers, oligomers, and mixtures thereof.

In another aspect of the present invention, a radiation curable binder blend is provided which is a mixture of the insoluble polymer binder described hereinabove and radiation curable monomers, prepolymers, and/or oligomers. The radiation curable binder blend in accordance with the present invention is capable of being formulated into a radiation curable ink jet ink composition, along with suitable colorants, without causing unacceptable increases in viscosity of the ink composition that would interfere with the jettablity of the ink composition. The radiation curable binder blend of the present invention may be cured via actinic radiation, such as, for example, ultraviolet (UV) radiation or electron beam (E-beam) radiation.

Typical radiation curable monomers, prepolymers and oligomers known in the art are suitable for blending with the insoluble polymer binders of the present invention. Such curable monomers include, for example, without limitation, hexanediol diacrylate, trimethylolpropane triacrylate, pentaerythritol triacrylate, 10 polyethyleneglycol diacrylate, for example, tetraethyleneglycol diacrylate), dipropyleneglycol diacrylate, tri(propylene glycol) triacrylate, neopentylglycol diacrylate, bis(pentaerythritol) hexa- acrylate, and the acrylate esters of ethoxylated or propoxylated glycols and polyols, for example, propoxylated neopentyl glycol diacrylate, isodecyl (meth) acrylate, ethoxylated trimethylolpropane triacrylate, triethylene glycol divinyl ether, diethylene glycol divinyl ether, 1,4-cyclohexanedimethanol divinyl ether and ethylene glycol monovinyl ether, as well as ethyl-1 propenyl ether, triethyleneglycol methyl propenyl ether, triethyleneglycol methyl vinyl ether and 2-cyclopenten-1-yl ether, and mixtures thereof.

In still another aspect of the present invention, a radiation curable ink jet ink composition is provided comprising the insoluble polymer binder as described hereinabove, one or more radiation curable monomers, radiation curable prepolymers, radiation curable oligomers, or mixtures thereof, as described hereinabove, and a colorant. The radiation curable ink jet ink composition of the present invention is adapted to be applied using typical ink jet printhead technology and cured via actinic radiation, such as, for example, ultraviolet (UV) radiation or electron beam (E-beam) radiation. It is noted that, as is well known in the art, curing ink compositions with UV radiation typically requires the inclusion of at least one photoinitiator in the ink composition, while curing with E-beam generally does not require inclusion of photoinitiators. The use of photoinitiators in connection with the present invention will be described in further detail hereinafter.

The radiation curable ink jet ink composition of the present invention may include the crosslinked, insoluble polymer binder composition in an amount from 0.1 wt% to 25 wt%, such as, for example, 1 wt% to 20 wt%, based on the total weight of the ink jet ink composition.

The radiation curable ink jet ink composition of the present invention may further include one or more radiation curable monomers and/or oligomers in an amount from 50 wt% to 85 wt%, such as, for example, 70 wt% to 80 wt%, based on the total weight of the ink composition.

The colorant that is included in the curable ink jet ink composition may be a pigment or dye. Moreover, the pigment may be an organic pigment or an inorganic pigment. "Organic pigment" means a pigment which is predominantly an organic compound or mixture of organic compounds, including carbon black.

Suitable organic pigments include, for example, surface modified and unmodified, anthroquinones, phthalocyanine blues, phthalocyanine greens, diazos, monoazos, heterocyclic yellows, pyranthrones, quinacridone pigments, dioxazine pigments, indigo, thioindigo pigments, perynone pigments, perylene pigments, isoindolene, polymer particles having at least one void, and the like. Carbon black is the generic name for small particle size carbon particles formed in the gas phase by the thermal decomposition of hydrocarbons and includes, for example, materials known in the art as furnace black, lampblack, channel black, acetylene black. Carbon black additionally encompasses treated, modified, and oxidized cabon black. Suitable inorganic pigments include titanium dioxide, iron oxide, and other metal powders. Generally, the amount of pigment(s) used is less than 20 wt%, such as, for example, 3-8 wt%, or even 2-6 wt%, based on the total weight of the ink composition.

As well known to persons of ordinary skill in the art, the ink jet ink composition may also include monomer-miscible or -soluble materials, such as polymers other than the crosslinked, insoluble polymer binder compositions of the present invention, including, but not limited to, inhibitors, dispersants, penetrants, chelating agents, co-solvents, flow aids, viscosity modifiers, surfactants, and surface tension modifiers.

The ink compositions of the present invention may be prepared by any method known in the art for making such compositions, for example, by mixing, stirring or agitating the ingredients together using any art recognized technique to form a radiation curable ink. The procedure for preparation of the ink composition of the present invention is not critical except to the extent that the ink composition is homogenous.

The ink composition of the present invention will typically be applied by piezoelectric ink jet printheads. Typical examples of substrates to which the inks of this invention can be applied are fabrics, either woven or nonwoven, paper, vinyl, leather, ceramics and polyester.

After application to a substrate, the ink composition of the present invention is then, prefereably, cured with actininc radiation. In the case where ultraviolet radiation is used to initiate the reaction, the ink jet ink composition includes a photoinitiator, or combination of photoinitiators that can react with the unreacted functionalities of the crosslinked, insoluble polymer binder composition to start a crosslinking reaction. Any suitable photoinitiator known in the art can be used to initiate the reaction. As is well known by persons having ordinary skill in the art, the photoinitiator(s) should be chosen such that the absorption of the photoinitiator is optimized for particular colorants being used in the ink, and for the lamp source being used. If desired, a photoinitiator synergist may be used to enhance cure and reduce oxygen inhibition. Curing conditions used for the ink compositions may vary depending on ink film thickness, colorant, and substrate, which would also be clear to persons of ordinary skill in the art. Generally, a cure dose of about 300mJ/cm2 to 700mJ/cm2 is sufficient to enact curing. The UV lamp source with a broad range of wavelength, such as that achievable with a iron doped or gallium doped UV lamp, is preferred when curing ink films greater than 6 microns in thickness, or when curing inks containing colorants that absorb radiation in the wavelength region characteristic of a typical H bulb.

The present invention further provides a method for improving the durability of a radiation ink jet ink composition applied to a substrate comprising: (a) forming an ink jet ink composition comprising a liquid medium, a colorant and one or more crosslinked, insoluble polymer binder compositions; (b) printing the ink on a substrate; and (c) curing the ink by applying UV or E-beam radiation.

Examples

The abbreviations listed below are used throughout the following examples:

ALMA = allyl methacrylate
AMPS = 2-acrylamido-2-methylpropane sulfonic acid
BA = butyl acrylate
DVB = divinylbenzene
EA = ethyl acrylate
FMA = furfuryl methacrylate
GMA = glycidyl methacrylate
IBOA = isobornyl acrylate
MAA = methacrylic acid
MMA = methyl methacrylate
TBAEMA = N-t-butylaminoethyl (meth)acrylate
TMPTA = trimethylol propane triacrylate

In addition, all percentages used in the following examples to describe the polymer compositions are weight percents based upon the total weight of the particular composition, latex, mixture, etc.

**Comparative Example A (Radiation Curable. Soluble Polymer Binder)**

A single stage emulsion polymer is prepared with a composition of 70 wt% EA / 28 wt% Styrene / 2 wt% MAA as follows. A monomer emulsion is prepared by mixing 70 grams ("g") of EA, 28 g of styrene, 2 g of MAA, 1.5 g of sodium lauryl sulfate, ("SLS", 28 % aqueous solution), and 100 g of water in a reactor. Then, 100 g of water and 4.5 g of SLS (28 % aqueous solution) are charged into the reactor. The reactor and its contents are then heated to 85°C. At 85°C, 20 g of the monomer emulsion described above is charged into the reactor, along with a mixture of 0.2 g of Ammonium persulfate in 10 g of water. The remainder of the monomer emulsion is charged into the reactor over a period of 90 minutes, along with a co-feed initiator solution prepared from 0.1 g of ammonium persulfate in 10 g of water. The co-feed initiator solution is then also fed into the reactor over a period of 90 minutes. The reactor is then cooled to 55°C. Aqueous solutions of t-butyl hydroperoxide (70%) and sodium formaldehyde sulfoxylate are added sequentially, with 20 minute hold periods at 55°C.
The latex is coagulated by mixing 100 g of the latex with 10 g of a 5 % $CaSO_4$ aqueous solution. The coagulated latex is then filtered, collected and washed with 1000 milliliters ("ml") of 5 % HCL aqueous solution. The resultant solid is filtered and washed with 1000 ml of dionized ("DI") water. The washing step is repeated 5 times. The polymer is then dried under vacuum oven at 30°C. The resulting polymer composition is soluble in radiation curable monomers and oligomers and is not expected to be able to be blended with radiation curable monomers and/or oligomers and colorants to form a radiation curable ink composition that is jettable in conventional ink jet printer devices.

**Example 1 (Crosslinked Radiation Curable Polymer)**

A single stage emulsion polymer is prepared with a composition of 60 wt% EA / 24 wt% Styrene / 1 wt% MAA / 10 wt% DVB / 5 wt% ALMA as follows. A monomer emulsion is prepared by mixing 60 g of EA, 22 g of styrene, 3 g of MAA, 10 g of DVB, 5 g of ALMA, 1.5 g of SLS (28 % aqueous solution) and 100 g of water in a reactor. Then 100 g of water and 4.5 g of SLS (28 % aqueous solution) are charged into the reactor. The reactor and its contents are then heated to 85°C. At 85°C, 20 g of the monomer emulsion described above is charged into the reactor along with a mixture of 0.2 g of Ammonium persulfate in 10 g of water. The remainder of the monomer emulsion is charged into the reactor over a period of 90 minutes, along with a co-feed initiator solution prepared from 0.1 g of ammonium persulfate in 10 g of water. The co-feed initiator solution is also then fed into the reactor over a period of 90 minutes. The reactor is then cooled to 55°C. Aqueous solutions of t-butyl hydroperoxide (70%) and sodium formaldehyde sulfoxylate are added sequentially, with 20 minute hold periods at 55°C.
The latex is coagulated by mixing 100 g of the latex with 10 g of a 5 % $CaSO_4$ aqueous solution. The coagulated latex is then filtered; collected and washed with 1000 ml of 5 % HCL aqueous solution. The resultant solid is filtered and washed with 1000 ml of DI water. The washing step is repeated 5 times. The polymer is then dried under vacuum oven at 30°C.

The resulting polymer composition is expected to be crosslinked. Furthermore, the resulting polymer composition is expected to be insoluble in radiation curable monomers and oligomers, to have a molecular weight of from about 500,000 to about 2,500,000, and be blendable with radiation curable monomers and/or oligomers to form a radiation curable binder blend in accordance with the present invention.

Example 2 (Crosslinked Radiation Curable Polymer)

A dispersion of 37.5 wt% BA / 37.5 wt& MMA / 15 wt% MAA / 10 wt% TMPTA is prepared via solution polymerization in IPA as follows. A 5 liter ("1") reactor is fitted with a thermocouple, a temperature controller, a purge gas inlet, a water-cooled reflux condenser with purge gas outlet, a stirrer, and a monomer feed line. To a separate vessel is charged 450 g of a monomer mixture (A) containing 169 g BA, 169 g MMA, 45 g TMPTA, 68 g MAA. To an additional vessel is charged an initiator mix (B) consisting of 18 g of a 75% solution of t-amyl peroxypivalate in mineral spirits (Triganox brand 125-C75, commercially available from Akzo Nobel, Edison, New Jersey, and 113 g isopropyl alcohol. A charge of 2330 g IPA is added to the reactor. After sweeping the reactor with nitrogen for approximately 30 minutes, heat is applied to bring the reactor charge to 79°C. When the contents of the reactor reach 79°C, a dual feed of monomer mixture (A) and initiator mix (B) is fed uniformly using feed pumps over a period of 120 minutes. At the end of the monomer and initiator feeds, the batch is held at 79°C for 30 minutes before adding the first of three initiator chasers, each of which consists of 9 g of a 75% solution of t-amyl peroxypivalate in mineral spirits (Triganox brand 125-C75, commercially available from Akzo Nobel, Edison, New Jersey; and 22.5 g IPA. A second initiator chaser addition is made 30 minutes after the first initiator chaser addition. Similarly, a final initiator chaser addition is made 30 minutes after the second initiator chaser addition. The batch is then held at the polymerization temperature of 79°C for an additional 2½ hours to achieve full conversion of monomer. 15% of the acid equivalents are neutralized with ammonium hydroxide. To this composition is added an amount of glycidyl methacrylate corresponding to 74 mole percent of the acid, and reacting at about 80°C until essentially all the glycidyl methacrylate has reacted.

Solvent is removed in vacuo and an aqueous solution of dilute ammonium hydroxide is added.

The resulting polymer binder is expected to be crosslinked and contain methacrylate functionality for UV curing. Moreover, the resulting polymer binder is expected to be insoluble in radiation curable monomers and oligomers, to have a molecular weight of from about 50,000 to about 2,000,000 and to be blendable with radiation curable monomers and/or oligomers to form a radiation curable binder blend in accordance with the present invention.

**Example 3 (Crosslinked Radiation Curable Polymer)**

A radiation-curable acrylic polymer is formed by preparing a two stage polymer of overall composition 35 wt% BA / 32 wt% MMA / 25 wt% MAA / 5 wt% TMPTA / 3.0 wt% ALMA using a polymerization process equivalent to that described above in connection with Example 1. Then, fifteen percent of the acid equivalents are neutralized with ammonium hydroxide. To this composition is added an amount of glycidyl methacrylate corresponding to 74 mole percent of the acid, containing 200 ppm butylated hydroxytoluene (BHT), and reacting at about 80°C until essentially all the glycidyl methacrylate has reacted. The latex is coagulated by mixing 100 g of the latex with 10 g of a 5 % $CaSO_4$ aqueous solution. The coagulated latex is filtered, collected and washed with 1000 ml of 5 % HCL aqueous solution. The resultant solid is filtered and washed with 1000 ml of DI water. The washing step is repeated 5 times. The polymer is then dried under vacuum oven at 30°C.

The resulting polymer is expected to be crosslinked and contain methacrylate functionality for UV curing. Moreover, the resulting polymer binder is expected to be insoluble in radiation curable monomers and oligomers, to have a molecular weight of from about 500,000 to about 2,500,000 and to be blendable with radiation curable monomers and/or oligomers to form a radiation curable binder blend in accordance with the present invention.

**Example 4 (Crosslinked Radiation Curable Polymer)**

A radiation-curable acrylic latex is formed by making a polymer of overall composition 20 wt% FMA / 20 wt% BA / 3 wt% ALMA / 2 wt% DVB / 35 wt% MMA / 10 wt% MAA / 10 wt% TMPTA. The polymer is prepared, coagulated and isolated by the process described above in connection with Example 1. The resulting polymer binder is expected to be crosslinked and insoluble in radiation curable monomers and oligomers. Moreover, the resulting polymer binder is expected to have a molecular weight of from about 500,000 to about 2,500,000 and to be blendable with radiation curable monomers and/or oligomers to form a radiation curable binder blend in accordance with the present invention.

**Example 5 (Crosslinked Radiation Curable Polymer)**

A radiation curable latex is formed by making a polymer of overall composition 20 wt% FMA / 20 wt% BA / 35 wt% MMA / 15 wt% MAA / 10 wt% TMPTA. The polymer is prepared, coagulated and isolated using the process described in Example 1. The resulting polymer binder is expected to be crosslinked and insoluble in radiation curable monomers and oligomers. Moreover, the resulting polymer binder is expected to have a molecular weight of from about 500,000 to about 2,500,000 and to be blendable with radiation curable monomers and/or oligomers to form a radiation curable binder blend in accordance with the present invention.

**Example 6 (Rubber Core/Shell Crosslinked Radiation Curable Polymer)**

A core/shell emulsion polymer is prepared, by a well known process, with a first stage composition of 84 wt% BA/ 10 wt% DVB / 5 wt% ALMA / 1 wt% MAA and a second stage composition of 60 wt% EA / 24 wt% Styrene / 1 wt% MAA /10 wt% DVB / 5 wt% ALMA. The weight ratio of first stage monomer to those of second stage in this core/shell polymer is 1 to 1.

Preparation of Stage One Monomer Emulsion

84 g of BA, 1 g of MAA, 10 g of DVB and 5 g of ALMA are premixed in a small container. Charge 1.5 g of SLS (28 % aqueous solution) and 100 g of water into a separate monomer emulsion container. The premix monomer is added into the monomer emulsion container under agitation over a period of 30 minutes to form the stage one monomer emulsion.

Preparation of Stage Two Monomer Emulsion

60 g of EA, 1 g of MAA, 24 g of Styrene, 10 g of DVB and 5 g of ALMA are premixed in a small container. Charge 1.5 g of SLS (28 % aqueous solution) and 100 g of water into a separate second monomer emulsion container. The premix monomer is added into the second monomer emulsion tank under agitation over a period of 30 minutes to form the stage two monomer emulsion.

Polymerization of Stage One and Stage Two Monomers

A reactor is charged with 200 g of water and 9.0 g of SLS (28 % aqueous 5 solution) under agitiation. The reactor and its contents are heated to 85°C. At 85°C, 30 g of the stage one monomer emulsion above is charged into the reactor along with a mixture of 0.4 g of ammonium persulfate in 10 g of water and the mixture is allowed to stand for 10 minutes. The remainder of the stage one monomer emulsion is charged into the reactor over a period of 60 minutes, along with a co-feed initiator solution prepared from 0.1 g of ammonium persulfate in 10 g of water. The co-feed initiator solution is also fed into the reactor over a period of 60 minutes. The stage two monomer emulsion is fed to the reactor as soon the first stage monomer emulsion feed ends. The stage two monomer emulsion is charged into the reactor over a period of 60 minutes, along with a co-feed initiator solution prepared from 0.1 g of ammonium persulfate in 10 g of water. The co-feed initiator solution is also fed into the reactor over a period of 60 minutes. The reactor is then cooled to 55°C. Aqueous solutions of 1 g of t-butyl hydroperoxide (70%) in 5 g of water and 0.5 g of sodium formaldehyde sulfoxylate in 10 g of water are added sequentially with 20 minute hold periods at 55°C.

The latex is then coagulated by mixing 100 g of the latex with 10 g of a 5 % $CaSO_4$ aqueous solution. The coagulated latex is next filtered, collected and washed with 1000 ml of a 5 % HCL aqueous solution. The resultant solid is filtered and washed with 1000 ml of DI water. The washing step is repeated 5 times. The polymer is then dried under vacuum oven at 30°C.

The resulting polymer binder is expected to be crosslinked and insoluble in radiation curable monomers and oligomers. Moreover, the resulting polymer binder is expected to have a molecular weight of from about 500,000 to about 2,500,000 and to be blendable with radiation curable monomers and/or oligomers to form a radiation curable binder blend in accordance with the present invention.

Ink Formulations:

The crosslinked, insoluble polymer binder compositions of the present invention can be formulated into ink jet ink compositions. When pigmented ink jet inks are desired, it is best to first disperse the pigment with a resin. Two examples of suitable compositions for pigment pastes are provided in Table 1 below.

Table 1

| Pigment Paste Preparations for bead mill | | |
|---|---|---|
| | Paste 1 | Paste 2 |
| Pigment Y-74 | 25 | - |
| Pigment Blue 15:3 | - | 15 |
| SR9003 | 73 | 83 |
| Paraloid™ DM-55 | 2 | 2 |

It is noted that SR9003 is a photocurable monomer resin available from Sartomer Company, Exton, PA, USA. Paraloid DM-55 is a resin available from Rohm and Haas Company, Philadelphia, PA. USA.

Examples of U.V. curable ink jet ink formulations which incorporate the crosslinked, insoluble polymer binder compositions of Examples 1 through 6 and the sample pigment pastes provided in Table 1 are provided in Table 2 below.

Table 2

| Sample Ink Jet Ink Formulations for U.V Curable Inks | | | | | | | | | | | | | | | |
|---|---|---|---|---|---|---|---|---|---|---|---|---|---|---|---|
| Composition | Ink A | Ink B | Ink C | Ink D | Ink E | Ink F | Ink G | Ink H | Ink I | Ink J | Ink K | Ink L | Ink M | Ink N | Ink O |
| Paste 1 | 25.0 | 25.0 | 25.0 | 25.0 | 25.0 | 25.0 | 25.0 | | | | | | | | |
| Paste 2 | | | | | | | | 15.0 | 15.0 | 15.0 | 15.0 | 15.0 | 15.0 | 15.0 | 15.0 |
| Polymer 1 | | 15.0 | 15.0 | | | | | | | | | | | | |
| Polymer 3 | | | | | | | | | | | | | | 15.0 | 15.0 |
| Polymer 4 | | | | | 15.0 | | | | | | | 15.0 | | | |
| Polymer 5 | | | | | | 15.0 | | | | | 15.0 | | | | |
| Polymer 6 | | | | | | | 15.00 | | 15.0 | 15.0 | | | | | |
| Comparative A | 15.0 | | | | | | | 15.0 | | | | | | | |
| SR206 | 55.0 | 55.0 | | 55.0 | | | | | | 65.0 | | 65.0 | 65.0 | | 65.0 |
| SR9003 | | | 55.0 | 15.0 | 55.0 | 55.0 | 55.0 | 65.0 | 65.0 | | 65.0 | | | 65.0 | 15.0 |
| Esacure™ KT37 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |

It is noted that SR206 and SR9003 are both photocurable monomer resins available from Sartomer Company, Exton, PA, USA. Esacure KT37 is a photoinitiator available from Sartomer Company, Exton, PA, USA.

Examples of E-beam curable ink jet ink formulations which incorporate the crosslinked, insoluble polymer binder compositions of Examples 1, 4 and 5 and the sample pigment Paste 1 provided in Table 1 are provided in Table 3 below. It is noted that, as is well know in the art, E-beam curable ink jet ink compositions do not require the inclusion of photoinitiators. Thus, for comparison. selected ink formulations (i.e., Inks A through F, inclusive) from Table 2 above have been modified by elimination of the photoinitiator and adjustment of the amounts of the remaining components of the ink.

Table 3:

| Sample Ink Jet Ink Formulations for E-beam Curable Inks | | | | | | |
|---|---|---|---|---|---|---|
| Composition | Ink A' | Ink B' | Ink C | Ink D' | Ink E' | Ink F' |
| Paste 1 | 25.0 | 25.0 | 25.0 | 25.0 | 25.0 | 25.0 |
| Polymer 1 | | 15.0 | 15.0 | | | |
| Polymer 4 | | | | | 15.0 | |
| Polymer 5 | | | | | | 15.0 |
| Comparative A | 15.0 | | | | | |
| SR206 | 60.0 | 60.0 | | 60.0 | | |
| SR9003 | | | 60.0 | 15.0 | 60.0 | 60.0 |

It is noted that SR206 and SR9003 are radiation curable resins available from Sartomer Company, Exton, PA, USA.

For all of the ink formulations provided in Tables 2 and 3, the final inks are filtered through a 1 micron filter. Each ink would then be separately applied to a substrate. The applied ink is then cured under either a UV lamp or an electron beam lamp, as appropriate to the nature of the particular ink, to initiate reaction of the photocurable functionality of the binders and photocurable monomers, where present (also known as "curing", which results in further crosslinking).

With reference to the UV curable ink formulations of Table 2, it is expected that Inks A and H would not be jettable at all due to high viscosities. Inks B-C, E-F, and I-N would show improved properties, compared to Inks D and O, in one or more of the following properties when applied and cured onto a substrate: jettability, durability, crock resistance, color retention, smear resistance, water resistance, optical density, image quality, hold out and lightfastness.

With reference to the E-beam curable ink jet ink formulations of Table 3, it is expected that Ink A' would not be jettable at all due to excessive viscosity. Inks B', C', E', and F' would show improved properties, compared to Ink D', in one or more of the following properties when applied and cured onto a substrate: jettability, durability, crock resistance, color retention, smear resistance, water resistance, optical density, image quality, hold out and lightfastness.

**Claims**

1. A polymer composition for formulation into a radiation curable composition, wherein said polymer composition is crosslinked and insoluble in radiation curable monomers, radiation curable prepolymers, radiation curable oligomers, and mixtures thereof, said polymer composition being suitable for formulation with at least one radiation curable monomer, prepolymer, and/or oligomer into a radiation curable composition.

2. The polymer composition of Claim 1, wherein said polymer composition is reactive.

3. The polymer composition of Claim 1, wherein said polymer composition has a number average molecular weight of up to 3,000,000.

4. The polymer composition of Claim 1, wherein said polymer composition comprises units derived from mono-ethylenically unsaturated (meth)acrylates, multi-ethylenically unsaturated (meth)acrylates, and mixtures thereof.

5. A radiation curable binder blend comprising a liquid medium and a polymer binder composition which comprises at least one polymer composition which is crosslinked and insoluble in radiation curable monomers, radiation curable prepolymers, radiation curable oligomers, and mixtures thereof, wherein, said liquid medium is comprised of monomers, radiation curable prepolymers, radiation curable oligomers, and mixtures thereof.

6. The radiation curable binder blend of Claim 5, wherein said radiation curable binder blend is formulated into an ink jet ink composition that has a viscosity of no greater than 0.15 Pa-s at ambient temperaure.

7. The radiation curable binder blend of Claim 5, wherein said at least one polymer composition comprises units derived from mono-ethylenically unsaturated (meth)acrylates, multi-ethylenically unsaturated (meth)acrylates, and mixtures thereof.

8. The radiation curable binder blend of Claim 5, wherein said liquid medium is present in an amount of from 30 wt% to 85 wt %, based on the total weight of the radiation curable binder blend.

9. A radiation curable ink jet ink composition comprising

a colorant;
a liquid medium; and
a polymer binder which comprises at least one polymer composition which is crosslinked and insoluble in radiation curable monomers, radiation curable prepolymers, radiation curable oligomers, and mixtures thereof, wherein, when said radiation curable binder blend is formulated with at least one radiation curable monomer, prepolymer, and/or oligomer into an ink jet ink composition, said ink jet ink composition is jettable.

10. The radiation curable ink jet ink composition of Claim 9, wherein said ink jet ink composition has a viscosity of no more than 0.15 Pa-s at ambient temperaure.

11. The radiation curable ink jet ink composition of Claim 9, wherein said liquid medium comprises a compound selected from the group consisting of radiation curable monomers, radiation curable prepolymers, radiation curable oligomers, and mixtures thereof, and is present in an amount of from 20 wt% to 85 wt%, based on the total weight of said ink jet ink composition.

12. The radiation curable ink jet ink composition of Claim 11, wherein said polymer binder composition is present in an amount of from 0.1 wt% to 25 wt%, based on the total weight of the ink jet ink composition and comprises units derived from compounds selected from the group consisting of units derived from mono-ethylenically unsaturated (meth)acrylates, multi-ethylenically unsaturated (meth)acrylates, and mixtures thereof.

13. The radiation curable ink jet ink composition of Claim 9, wherein said colorant is present in an amount of less than 20 wt%, based on the total weight of the ink jet ink composition.

14. A method for improving the characteristics of a radiation curable ink jet ink composition applied to a substrate comprising the steps of: (a) providing a radiation curable ink jet ink composition comprising a liquid medium, a colorant and a polymer binder composition comprising at least one polymer composition which is crosslinked and insoluble in radiation curable monomers, radiation curable prepolymers, radiation curable oligomers, and mixtures thereof; (b) applying said ink jet ink composition to a substrate; and (c) curing said ink jet ink composition by applying actinic radiation thereby forming an image on said substrate.

15. An image formed by the method of claim 9.

**EP 1 571 187 A1**

European Patent
Office

## EUROPEAN SEARCH REPORT

Application Number

EP 05 25 0953

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 0 187 045 A (ATLANTIC RICHFIELD COMPANY; ELF ATOCHEM S.A) 9 July 1986 (1986-07-09) * the whole document * ----- | 1,5,9, 14,15 | C09D11/10 C09D11/00 |
| D,A | EP 0 997 508 A (AGFA-GEVAERT) 3 May 2000 (2000-05-03) * the whole document * ----- | 1,5,9, 14,15 | |
| D,A | US 6 433 038 B1 (TANABE SEIICHI ET AL) 13 August 2002 (2002-08-13) * the whole document * ----- | 1,5,9, 14,15 | |

| | |
|---|---|
| | TECHNICAL FIELDS SEARCHED (Int.Cl.7) |
| | C09D |

The present search report has been drawn up for all claims

| Place of search | Date of completion of the search | Examiner |
|---|---|---|
| The Hague | 7 June 2005 | Miller, A |

## ANNEX TO THE EUROPEAN SEARCH REPORT
## ON EUROPEAN PATENT APPLICATION NO.

EP 05 25 0953

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2005

| Patent document cited in search report | | Publication date | Patent family member(s) | | Publication date |
|---|---|---|---|---|---|
| EP 0187045 | A | 09-07-1986 | CA | 1268284 A1 | 24-04-1990 |
| | | | DE | 3583667 D1 | 05-09-1991 |
| | | | EP | 0187045 A2 | 09-07-1986 |
| | | | JP | 61171781 A | 02-08-1986 |
| EP 0997508 | A | 03-05-2000 | EP | 0997508 A1 | 03-05-2000 |
| | | | US | 6310115 B1 | 30-10-2001 |
| US 6433038 | B1 | 13-08-2002 | AT | 272098 T | 15-08-2004 |
| | | | DE | 60012390 D1 | 02-09-2004 |
| | | | DE | 60012390 T2 | 23-12-2004 |
| | | | EP | 1036831 A1 | 20-09-2000 |
| | | | JP | 2000336295 A | 05-12-2000 |